Europäisches Patentamt

European Patent Office

Office européen des brevets

(19)

(11) Numéro de publication : **0 082 755**
**B1**

(12) **FASCICULE DE BREVET EUROPÉEN**

(45) Date de publication du fascicule du brevet :
09.10.85

(51) Int. Cl.⁴ : **H 04 M   9/10**, **H 04 M   9/08**,
**H 04 M   1/60**

(21) Numéro de dépôt : **82402263.6**

(22) Date de dépôt : **10.12.82**

(54) Poste téléphonique à amplificateurs de parole.

(30) Priorité : **18.12.81 FR 8123727**

(43) Date de publication de la demande :
**29.06.83 Bulletin 83/26**

(45) Mention de la délivrance du brevet :
**09.10.85 Bulletin 85/41**

(84) Etats contractants désignés :
**DE GB IT SE**

(56) Documents cités :
**DE-A- 1 812 273**
**DE-B- 1 160 897**
**DE-B- 1 228 310**
**FR-A- 2 452 215**
**FR-A- 2 500 698**
**REVIEW OF THE ELECTRICAL COMMUNICATION LABORATORIES, vol. 24, nos. 3-4, mars-avril 1976, pages 235-245, Tokyo (JP); K. KATO et al.: "A voice-switching circuit analysis and design method"**
**THE POST OFFICE ELECTRICAL ENGINEER'S JOURNAL, vol. 60, no. 1, avril 1967, pages 65-71; B. COPPING et al.: "Designing a voice-switched loudspeaking telephone-loudspeaking telephone No. 4"**

(73) Titulaire : **THOMSON-CSF TELEPHONE**
**146, Boulevard de Valmy**
**F-92707 Colombes (FR)**

(72) Inventeur : **Chataignon, André**
**THOMSON-CSF SCPI 173 Bld. Haussmann**
**F-75379 Paris Cedex 08 (FR)**
Inventeur : **Poirier, Jean-Pierre**
**THOMSON-CSF SCPI 173 Bld. Haussmann**
**F-75379 Paris Cedex 08 (FR)**
Inventeur : **Phan Tich, Du**
**THOMSON-CSF SCPI 173 Bld. Haussmann**
**F-75379 Paris Cedex 08 (FR)**

(74) Mandataire : **Weinmiller, Jürgen et al**
**Zeppelinstrasse 63**
**D-8000 München 80 (DE)**

## Description

La présente invention concerne un poste téléphonique à amplificateurs de parole, plus connu sous le nom de poste téléphonique « mains libres ».

Dans les postes téléphoniques « mains libres » un microphone très sensible et un haut-parleur associés à des amplificateurs à grand gain sont intégrés au boîtier, ce qui dispense l'usager du maintien d'un microphone et d'un écouteur à proximité immédiate de la bouche et de l'oreille. Les facilités d'utilisation offertes par ces postes sont cependant compensées par quelques servitudes dues aux phénomènes suivants.

Du fait de la présence d'amplificateurs à grand gain dans ces postes, le couplage acoustique qui prend naissance entre le haut-parleur et le microphone provoque très rapidement l'apparition de sifflements, connus sous le nom d'effet Larsen, qui rendent la conversation quasi inaudible.

De même, du fait de la présence à l'intérieur du poste d'un circuit de couplage de ce poste avec la ligne téléphonique, destiné à aiguiller le signal reçu de la ligne téléphonique vers le haut-parleur, le signal émis par le microphone vers la ligne téléphonique, provoque un couplage électrique entre les voies d'émission et réception, dû au déséquilibre apporté par la ligne au niveau du dispositif de couplage différentiel de ces deux voies. En raison de la présence d'amplificateurs à grand gain, ce couplage électrique provoque également l'apparition de sifflements.

Pour éviter ces sifflements très désagréables, il est connu d'interrompre la boucle permettant l'entretien des oscillations dues à l'effet Larsen, en interrompant soit la liaison entre le circuit de couplage et le haut-parleur, soit la liaison entre le microphone et le circuit de couplage, suivant que l'usager parle ou écoute son correspondant. Un poste « mains libres » ne restitue alors fidèlement la conversation que si les deux correspondants s'expriment à tour de rôle et non pas simultanément. L'interruption peut être remplacée par une très forte atténuation, ce qui limite très fortement les conséquences de l'effet Larsen, sans pour autant interdire toute possibilité d'intervention du correspondant.

Un poste « mains libres » de ce type est décrit dans la demande de brevet français n° 79 07 109 (FR-A-2 452 215).

Ce poste comporte deux interrupteurs interposés respectivement sur la voie réception entre le circuit de couplage et le haut-parleur, et sur la voie émission entre le microphone et le circuit de couplage. La commande de ces interrupteurs est basée sur une comparaison des signaux prélevés en amont des interrupteurs, c'est-à-dire respectivement sur la voie émission, entre le microphone et l'interrupteur associé à cette voie, et sur la voie réception, entre le circuit de couplage et l'interrupteur associé à cette voie.

Du fait que les signaux comparés sont prélevés en amont des interrupteurs, l'effet Larsen est pris en compte dans cette comparaison. Or il faut éviter que la présence d'effet Larsen en amont de l'interrupteur sur la voie interrompue ne soit interprétée comme la présence d'un signal de parole et ne vienne remettre en question la décision de fermeture de l'interrupteur sur l'autre voie, ce qui aboutirait à un hachage de la communication.

Pour cela, il est connu, d'après la même demande de brevet, de prélever la même quantité de signal sur les deux voies tant qu'aucun des interrupteurs n'a été fermé, puis d'introduire une différence dans la quantité de signal prélevé sur les deux voies une fois que l'un des interrupteurs a été fermé.

Pour cela cette même demande de brevet propose d'effectuer pour la commande de l'un des interrupteurs une première comparaison entre d'une part le signal prélevé sur la voie émission, et d'autre part le signal prélevé sur la voie réception, affecté, en cas de présence de signal sur les deux voies, d'un coefficient multiplicatif asservi à la valeur du signal obtenu à l'issue de cette première comparaison et pour la commande de l'autre interrupteur une deuxième comparaison entre d'une part le signal prélevé sur la voie réception, et d'autre part le signal prélevé sur la voie émission, affecté, en cas de présence de signal sur les deux voies, d'un coefficient multiplicatif asservi à la valeur du signal obtenu à l'issue de cette deuxième comparaison.

La complexité de cette méthode de traitement des signaux prélevés nécessite la transformation des signaux de parole en données binaires, d'où la présence d'une logique de commande complexe et l'insertion d'une ligne à retard entre le point de prélèvement du signal sur chacune des voies, et l'interrupteur associé à chacune de ces voies, le retard procuré par cette ligne à retard étant égal au temps de traitement des signaux prélevés.

Le poste téléphonique à amplificateurs de parole selon l'invention permet de simplifier le traitement des signaux prélevés sur les voies émission et réception, de réduire le coût pour le traitement de ces signaux et de réduire la durée de ce traitement effectué en vue de détecter la présence d'un signal de parole sur l'une de ces voies, et d'éviter, une fois qu'un signal de parole a été détecté sur l'une de ces voies, que la présence de sifflements dus à l'effet Larsen sur l'autre voie ne fasse son apparition.

Un poste téléphonique à amplificateurs de parole selon l'invention comporte un premier atténuateur inséré sur une voie émission reliant un microphone à un circuit de couplage avec une ligne téléphonique, un second atténuateur inséré sur une voie réception reliant le circuit de couplage à un haut-parleur, des moyens de commande des atténuateurs en fonction des niveaux relatifs des signaux prélevés respectivement en amont des atténuateurs sur les voies émission et réception, niveaux calculés respectivement par des intégrateurs, et des moyens pour introduire une différence entre les niveaux des signaux prélevés respectivement sur les deux voies, une fois que l'atténuateur associé à l'une des voies a été mis en position d'atténuation, et l'atténuateur associé à l'autre voie en position de non-atténuation, chaque atténuateur consistant en une impédance variable montée en dérivation sur la voie en question, et pouvant prendre deux valeurs, l'une très faible, l'autre très grande, et les moyens pour introduire une différence entre les niveaux des signaux prélevés respectivement sur les deux voies consistant en un pont de résistances formé au moyen de deux résistances fixes insérées sur chacune des voies en amont de l'atténuateur associé à cette voie, et au moyen de l'impédance variable constituant l'atténuateur, le point commun aux deux résistances fixes constituant le point de prélèvement du signal sur chaque voie.

Par ailleurs, pour pouvoir effectuer une comparaison des signaux prélevés sur les voies émission et réception, avec un résultat stable, il est nécessaire de supprimer les pointes dues par exemple aux intonations violentes ou les trous dus par exemple aux silences entre les mots d'une même phrase. A défaut d'une telle précaution, les interrupteurs disposés sur les voies émission et réception réagiraient en effet par un hachage de la communication.

Pour remédier à cet inconvénient, et toujours dans la même optique d'un accroissement de la rapidité du traitement des signaux prélevés sur les voies émission et réception, la présente invention propose également un dispositif d'intégration très rapide de ces signaux, de conception simple et bien adaptée à la spécificité des signaux de parole.

Les objets et caractéristiques de la présente invention apparaîtront plus clairement à la lecture de la description suivante d'un exemple de réalisation, ladite description étant faite en relation avec les dessins ci-annexés dans lesquels :

la figure 1 est un schéma synoptique d'un poste téléphonique conforme à la présente invention ;

la figure 2 est un schéma détaillé d'un poste téléphonique conforme à la présente invention.

Des éléments identiques représentés sur des figures différentes portent des références identiques.

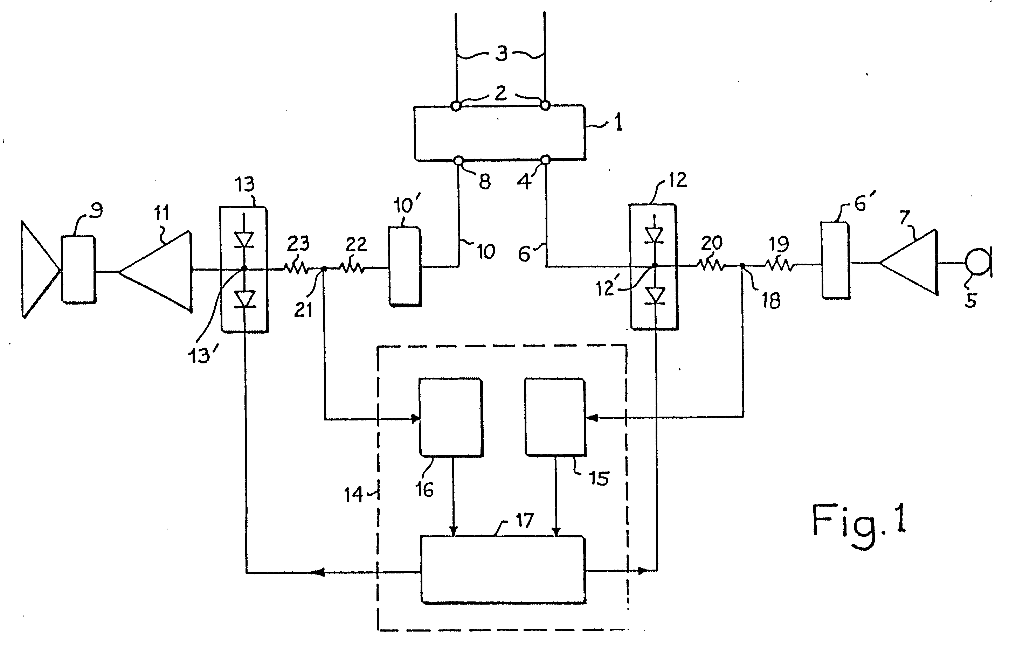

Le poste téléphonique « mains libres » représenté sur la figure 1 comporte un circuit de couplage 1 muni d'entrées-sorties 2 reliées à une ligne téléphonique à deux fils 3, d'une entrée 4 reliée à un microphone très sensible 5 par une émission 6 sur laquelle sont localisés un premier régulateur automatique de niveau 6' et un amplificateur 7 à grand gain, et d'une sortie 8 reliée à un haut-parleur 9 par une voie réception 10 sur laquelle sont localisés un second régulateur automatique de niveau 10' et un amplificateur 11 à grand gain.

Conformément aux principes exposés précédemment, un atténuateur 12 est placé sur la voie émission en un point 12' situé entre le régulateur automatique de niveau 6' et l'entrée 4 du circuit de couplage. Un atténuateur 13 est également placé sur la voie réception en un point 13' situé entre le régulateur automatique de niveau 10' et l'amplificateur 11.

Ces atténuateurs sont représentés schématiquement par deux diodes connectées par une première borne respectivement pour la voie émission au point 12' et pour la voie réception au point 13'. La commande des atténuateurs 12 et 13 est assurée par des moyens de commande 14 munis de deux sorties reliées respectivement à un circuit de commande des diodes constituant les atténuateurs 12 et 13.

Ces moyens de commande 14 comportent un intégrateur 15 du signal présent en un point de la voie émission 6 situé entre le régulateur automatique de niveau 6' et le point 12' et un intégrateur 16 du signal présent en un point de la voie réception 10 situé entre le régulateur automatique de niveau 10' et le point 13'.

Les moyens de commande 14 comportent également un comparateur 17 destiné à comparer les niveaux fournis respectivement par les circuits d'intégration 15 et 16 puis à comparer le signal retenu à l'issue de cette comparaison avec une valeur seuil prédéterminée. Le comparateur 17 est muni de deux sorties constituant les sorties des moyens de commande 14.

Conformément à l'invention le signal d'entrée de l'intégrateur 15 est prélevé au point commun 18 à deux résistances 19 et 20 insérées sur la voie émission 6, entre le régulateur automatique de niveau 6' et le point 12'. De même le signal d'entrée de l'intégrateur 16 est prélevé au point commun 21 à deux résistances 22 et 23 insérées sur la voie réception 10, entre le régulateur automatique de niveau 10' et le point 13'.

On explique maintenant le fonctionnement du poste « mains libres » représenté sur la figure 1 en envisageant successivement les différents cas de figures possibles.

Les atténuateurs 12 et 13 utilisés dans ce poste utilisent la variation de l'impédance de deux diodes lorsqu'un courant issu d'un générateur 123 ou 133 les parcourt. Lorsqu'aucun courant ne circule dans les diodes celles-ci présentent une impédance élevée. Lorsque le courant issu du générateur circule dans les diodes, celles-ci présentent une impédance très faible. Il est possible de contrôler l'atténuation apportée par ces diodes en faisant circuler dans celles-ci un courant plus ou moins élevé car la variation de leur impédance est fonction du courant qui les parcourt.

L'avantage de ces atténuateurs à l'inverse d'un interrupteur, est qu'il ne se produit aucun claquement lors de la commutation de la voie. De plus comme ils permettent de laisser passer une portion de signal, l'utilisateur ayant la parole comprend que son interlocuteur désire prendre la parole.

Lorsque les atténuateurs 12 et 13 sont tous les deux en position d'atténuation, c'est-à-dire lorsque les diodes présentent une impédance très faible la tension prélevée au point 18 est égale à une fraction de la tension obtenue en sortie du régulateur automatique de niveau 6', cette fraction étant en l'occurrence égale au rapport entre la résistance 19 et la somme des résistances 19 et 20, et de la résistance des deux diodes. De même la tension prélevée au point 21 est égale à une fraction de la tension obtenue sur la sortie 8 du circuit de couplage, fraction égale au rapport entre la résistance 22 et la somme des résistances 22 et 23 et de la résistance des deux diodes.

Par conséquent lorsque les atténuateurs 12 et 13 sont tous les deux en position d'atténuation, les signaux prélevés aux points 18 et 21 sont tous les deux constitués par une fraction des signaux de parole tels qu'ils se présentent respectivement en sortie des régulateurs automatiques de niveau 6' et 10'.

En revanche, lorsque l'un des atténuateurs 12 ou 13 est en position d'atténuation, et l'autre en position de non-atténuation, et par exemple lorsque l'atténuateur 12 est en position de non-atténuation alors que l'atténuateur 13 est en position d'atténuation (cette situation se produisant lorsque l'abonné local parle), les diodes constituant l'atténuateur 12 présente une impédance élevée alors que les diodes constituant l'atténuateur 13 présente une impédance très faible. La tension prélevée au point 21 est donc toujours égale à une fraction de la tension obtenue à la sortie du régulateur automatique de niveau 6' alors que la tension prélevée au point 18 est égale à la tension obtenue en sortie du régulateur automatique de niveau 10'. Les résistances 19 et 20 se trouvent en série mais la résistance présentée par celles-ci est négligeable car le circuit de couplage 1 présente une entrée 4 à haute impédance. La situation serait bien sûr inversée si c'était l'atténuateur 13 qui était en position de non-atténuation et l'atténuateur 12 en position d'atténuation.

Ainsi, lorsque les deux atténuateurs ne sont pas dans le même état, un déséquilibre est créé entre la quantité de signal prélevé respectivement sur les voies émission et réception. Sur l'une de ces voies, on prélève le signal de parole tel qu'il se présente réellement en sortie du régulateur automatique de niveau associé à cette voie tandis que sur l'autre, on ne prélève qu'une fraction de ce signal de parole.

Ceci permet de se prémunir contre toute commutation intempestive due au couplage acoustique entre le microphone et le haut-parleur, ou contre une mauvaise réjection du système diférentiel du circuit de couplage dû à la ligne utilisée. De plus, la commutation d'une fraction du signal, à la totalité de ce signal, et la commutation inverse, se produisant instantanément dès lors que l'état d'un atténuateur change, ce poste ne nécessite l'insertion d'aucune ligne à retard sur les voies émission et réception, et par conséquent aucun délai supplémentaire n'est introduit dans l'acheminement de la communication.

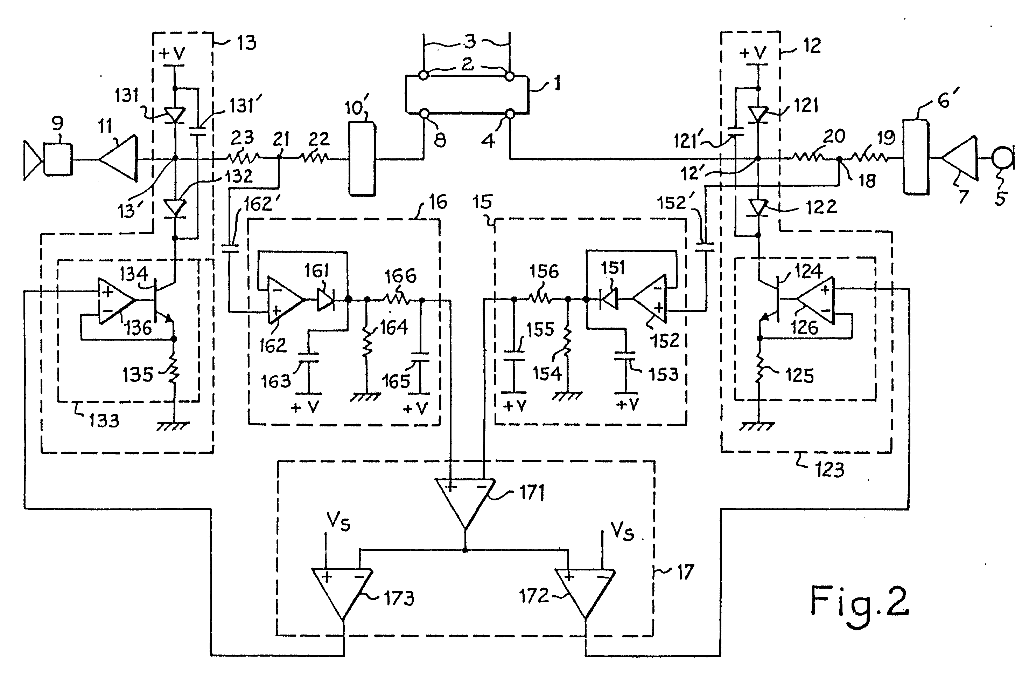

Sur la figure 2 on a représenté de manière plus détaillée les atténuateurs 12 et 13 et les intégrateurs 15 et 16.

L'atténuateur 12 comporte une première diode 121 dont l'anode est reliée à une source de tension continue délivrant un potentiel + V et dont la cathode est reliée au point 12' de la voie émission. L'atténuateur 12 comporte également une seconde diode 122 dont l'anode est reliée au point 12' de la voie émission et dont la cathode est reliée à la sortie d'un générateur de courant 123. L'anode de la diode 121 est reliée à l'une des bornes d'un condensateur 121', l'autre borne du condensateur 121' étant reliée à la cathode de la diode 122.

Le générateur de courant 123 comporte par exemple un transistor 124 dont le collecteur est relié à la cathode de l'anode 122, dont l'émetteur est relié, par l'intermédiaire d'une résistance 125 à une source de tension continue délivrant un potentiel de référence, et un amplificateur opérationnel 126 dont l'entrée non inverseuse est reliée à l'une des sorties du comparateur 17, l'entrée inverseuse à l'émetteur du transistor 124, et la sortie à la base du transistor 124.

L'atténuateur 13 comporte les mêmes éléments, agencés et référencés de la même façon que l'atténuateur 12, à savoir une première diode 131, une seconde diode 132, un condensateur 131' et un générateur de courant 133 comportant lui-même un transistor 134, une résistance 135, et un amplificateur opérationnel 136 dont l'entrée non inverseuse est reliée à l'autre sortie du comparateur 17.

L'intégrateur 15 comporte une cellule de redressement comportant elle-même une diode 151 et un amplificateur opérationnel 152. L'entrée non inverseuse de l'amplificateur opérationnel 152 est reliée à l'une des bornes d'un condensateur de liaison 152', l'autre borne du condensateur de liaison 152' étant reliée au point 18 de la voie émission. L'entrée inverseuse de l'amplificateur opérationnel 152 est reliée à la cathode de la diode 151, et l'anode de la diode 151 à la sortie de l'amplificateur opérationnel 152.

L'intégrateur 15 comporte également un premier circuit « RC » réalisé au moyen d'un condensateur 153 muni d'une première borne reliée à la cathode de la diode 151 et d'une deuxième borne reliée à une source de tension continue délivrant un potentiel + V, et d'une résistance 154 munie d'une première borne reliée à la cathode de la diode 151 et d'une deuxième borne reliée à une source de tension continue délivrant un potentiel de référence.

L'intégrateur 15 comporte également un second circuit « RC » réalisé au moyen de la résistance 154, d'un condensateur 155, et d'une résistance 156, le condensateur 155 étant muni d'une première borne reliée à une source de tension continue délivrant un potentiel + V, et d'une seconde borne qui constitue la sortie de l'intégrateur 15, la résistance 156 étant connectée par une première borne à la première borne de la résistance 154 et par une seconde borne à la seconde borne du condensateur 155.

L'intégrateur 16 est identique à l'intégrateur 15. Il est réalisé à partir des mêmes éléments agencés de la même façon : une diode 161, un amplificateur opérationnel 162, un condensateur de liaison 162', un condensateur 163, une résistance 164, un condensateur 165 et une résistance 166.

Le comparateur 17 comporte un premier comparateur 171 muni d'une entrée inverseuse reliée à la sortie de l'intégrateur 15, et d'une entrée non inverseuse reliée à la sortie de l'intégrateur 16, un deuxième comparateur 172 muni d'une entrée non inverseuse reliée à la sortie du comparateur 171 et d'une entrée inverseuse qui reçoit en permanence une tension de seuil $V_S$, et un troisième comparateur 173 muni d'une entrée inverseuse reliée à la sortie du comparateur 171 et d'une entrée non inverseuse qui reçoit également en permanence la même tension de seuil $V_S$. La sortie du comparateur 172 constitue l'une des sorties du comparateur 17 et est reliée à l'entrée de commande du générateur de courant 123. La sortie du comparateur 173 constitue l'autre sortie du comparateur 17 et est reliée à l'entrée de commande du générateur de courant 133.

Le poste représenté sur la figure 2 fonctionne de la façon suivante. On explique tout d'abord le fonctionnement des intégrateurs et par exemple de l'intégrateur 15.

Le signal alternatif prélevé au point 18 de la voie émission est tout d'abord redressé par la cellule de redressement constituée de la diode 151 et de l'amplificateur opérationnel 152. Le signal ainsi redressé subit alors une première intégration à travers le premier circuit « RC » constitué par le condensateur 153 et par la résistance 154.

La constante de temps de charge de ce premier circuit « RC » est très faible tandis que sa constante de temps de décharge est choisie de manière à permettre un lissage des unités phonétiques fondamentales, à savoir les syllabes. En effet les syllabes successives d'un même mot n'étant pas émises avec la même intensité, il est nécessaire d'effectuer un tel lissage afin d'éviter une commande intempestive des atténuateurs suivant l'intensité émise. La constante de temps de décharge de ce premier circuit « RC » est donc choisie égale à la durée moyenne d'une syllabe.

L'enveloppe obtenue à l'issue de cette première intégration subit une intégration dans le deuxième circuit « RC » constitué par le condensateur 155 et par les résistances 154 et 156. La constante de temps de décharge de ce deuxième circuit « RC » est choisie de manière à permettre un lissage des groupes de syllabes, c'est-à-dire des mots. En effet, la présence de silences entre les mots successifs d'une même phrase pouvant également donner lieu à un hachage de la parole, il est nécessaire d'effectuer un tel lissage. La constante de temps de ce deuxième circuit « RC » est donc choisie égale à la durée moyenne des intervalles séparant les mots d'une même phrase.

Les enveloppes obtenues en sortie des intégrateurs 15 et 16 à l'issue de ces deux opérations de lissage successives sont pratiquement identiques à une tension continue, ce qui permet d'effectuer une comparaison de ces deux enveloppes avec un résultat stable.

Cette structure particulière des intégrateurs contribue à améliorer la rapidité et la fiabilité du traitement des signaux prélevés sur les voies émission et réception. En effet le premier circuit « RC », destiné au lissage des syllabes, a une constante de temps de charge très faible, donc un temps de réponse très rapide, ce qui permet par une commande très rapide des atténuateurs d'éviter de couper les premières syllabes d'une communication.

On explique maintenant le fonctionnement des atténuateurs.

L'atténuateur 12 est réalisé par deux blocs 121 et 122 montées dans le même sens. Ces diodes sont découplées par une capacité 121' qui permet de symétriser le montage des deux diodes afin de ne pas apporter de distorsion au signal BF. Le courant qui traverse ces diodes est fixé par le générateur de courant 123 constitué par l'amplificateur opérationnel 126, le transistor 124 et la résistance 125. Le courant de base du transistor 124 est fixé par l'amplificateur opérationnel 126 et le courant traversant les diodes est lui-même fixé par la résistance 125. L'amplificateur opérationnel 126 est lui-même commandé par la sortie du comparateur 17.

Le comparateur 17 est tel que si le niveau du signal obtenu en sortie de l'intégrateur 15 s'avère à la fois supérieur au niveau du signal obtenu en sortie de l'intégrateur 16, et supérieur au niveau seuil $V_S$, le courant de base du transistor 124 est nul et les diodes 121 et 122 présentent une impédance très élevée, et le courant de base du transistor 134 est égal à une valeur telle que les diodes 131 et 132 présentent une impédance très faible. Ceci revient à placer l'atténuateur 12 en position de non-atténuation et l'atténuateur 13 en position d'atténuation. La situation serait bien sûr inversée si le niveau du signal obtenu à la sortie de l'intégrateur 16 était supérieur au niveau du signal obtenu à la sortie de l'intégrateur 15.

Le schéma décrit à la figure 2 est amélioré par l'insertion en amont des points de prélèvement des signaux sur les voies émission et réception, des régulateurs automatiques de niveaux 6' et 10' destinés à s'affranchir des perturbations introduites sur la voie émission, par le fait que l'abonné local par le plus ou moins près du microphone, et sur la voie réception, par le fait que l'affaiblissement introduit par la ligne téléphonique est plus ou moins grand.

## Revendications

1. Poste téléphonique à amplificateurs de parole (7 et 11) comportant un premier atténuateur (12) inséré sur une voie émission (6) reliant un microphone (5) à un circuit de couplage (1) avec une ligne téléphonique (3), un second atténuateur (13) inséré sur une voie réception (10) reliant le circuit de couplage (1) à un haut-parleur (9), des moyens de commande (14) des atténuateurs (12 et 13) en fonction des niveaux relatifs des signaux prélevés respectivement en amont des atténuateurs (12, 13) sur les voies émission (6) et réception (10), niveaux calculés respectivement par des intégrateurs (15, 16), et des moyens pour introduire une différence entre les niveaux des signaux prélevés respectivement sur les deux voies, une fois que l'atténuateur associé à l'une des voies a été mis en position d'atténuation, et l'atténuateur associé à l'autre voie en position de non-atténuation, caractérisé en ce que chaque atténuateur (12, 13) consiste en une impédance variable montée en dérivation sur la voie en question, pouvant prendre deux valeurs, l'une très faible, l'autre très grande, et en ce que les moyens pour introduire une différence entre les niveaux des signaux prélevés respectivement sur les deux voies consistent en un pont de résistances formé au moyen de deux résistances fixes (19 et 20, 22 et 23) insérées sur chacune des voies en amont de l'atténuateur associé à cette voie, et au moyen de la résistance variable constituant l'atténuateur, le point commun aux deux résistances fixes constituant le point de prélèvement (18, 21) du signal sur chaque voie, et en ce que chaque atténuateur (12, 13) comporte deux diodes (121 et 122, 131 et 132) montées dans le même sens, ayant une électrode commune reliée à la voie associée à cet atténuateur, l'une d'elles ayant son autre électrode mise à un potentiel donné, l'autre ayant son autre électrode reliée à l'une des bornes d'un générateur de courant (123, 133) apte à générer, suivant la commande qui lui est appliquée par les moyens de commande (14), un courant ayant une première ou une deuxième valeur, les diodes (121 et 122, 131 et 132) présentant une résistance très faible ou très élevée suivant que le courant qui les traverse à la première ou la deuxième valeur précitée, l'autre borne du générateur de courant (123, 133) étant mise à un potentiel donné, l'un des deux potentiels donnés constituant un potentiel de référence.

2. Poste téléphonique selon la revendication 1, caractérisé en ce que chaque intégrateur (15, 16) comporte un circuit redresseur (151 et 152, 161 et 162), suivi d'un premier circuit de lissage (153, 154 et 163, 164) apte à effectuer un lissage des syllabes, suivi lui-même d'un second circuit de lissage (154, 155, 156 et 164, 165, 166) apte à effectuer un lissage des mots.

3. Poste téléphonique selon la revendication 2, caractérisé en ce que le premier circuit de lissage (153, 154 et 163, 164) est un circuit « RC » ayant une constante de temps de charge très faible et une constante de temps de décharge égale à la durée moyenne d'une syllabe.

4. Poste téléphonique selon l'une des revendications 2 et 3, caractérisé en ce que le second circuit de lissage (154, 155, 156 et 164, 165, 166) est un circuit « RC » ayant une constante de temps de décharge égale à la durée moyenne des silences entre mots d'une même phrase.

## Claims

1. A speech-amplifier (7 and 11) telephone subscriber station comprising a first attenuator (12) inserted in a transmission channel (6) connecting a microphone (5) to a circuit (1) which provides a coupling with a telephone line (3), a second attenuator (13) inserted in a reception channel (10) connecting the coupling circuit (1) to a loudspeaker (9), means for controlling (14) said attenuators (12 and 13) as a function of the relative levels of the signals collected respectively upstream of the attenuators (12, 13) in said transmission (6) and reception channels (10), said levels being calculated respectively by integrators (15, 16), and means for introducing a difference between the levels of the signals collected respectively from the two channels, once said attenuator associated with one of the channels has been put in the attenuation position and the attenuator associated with the other channel has been put in the non-attenuation position, characterized in that each attenuator (12, 13) is constituted by a variable impedance which is mounted in shunt on the corresponding channel and is capable of assuming two values, namely a very low value and a very high value, and in that the means for introducing a difference between the levels of the signals collected respectively from said channels consist of a resistor bridge formed by means of two fixed resistors (19 and 20, 22 and 23) inserted in each channel upstream of the attenuator which is associated with this channel, and by means of the variable resistor which constitutes the attenuator, the common point of the two fixed resistors constituting the point of collection (18, 21) of the signal on each channel, and in that each attenuator (12, 13) comprises two diodes (121 and 122, 131 and 132) mounted in the same direction and having a common point connected to the channel which is associated with this attenuator, the other electrode of one of the diodes being put at a given potential whilst the other electrode of the other diode is connected to one of the terminals of a current generator (123, 133) which is capable of generating a current having a first or a second value according to the control applied thereto by said control means (14), the diodes (121 and 122) having a very low resistance or a very high resistance according to the current which flows through the diodes and which has said first or said second value, the other terminal of said current generator (123, 133) being put at a given potential, one of the two given potentials constituting a reference potential.

2. A telephone station according to claim 1, characterized in that each integrator (15, 16) comprises a rectifying circuit (151 and 152, 161 and 162) followed by a first smoothing circuit (153, 154 and 163, 164) which is capable of smoothing syllabes and is in turn followed by a second smoothing circuit (154, 155, 156 and 164, 165, 166) for smoothing words.

3. A telephone station according to claim 2, characterized in that the first smoothing circuit (153, 154 and 163, 164) is an R-C circuit having a very short charge time constant and a discharge time constant which is equal to the mean time-duration of one syllable.

4. A telephone station according to one of claims 2 and 3, characterized in that the second smoothing circuit (154, 155, 156 and 164, 165, 166) is an R-C circuit having a discharge time constant equal to the mean time-duration of the silent periods between words of any given phrase.

## Patentansprüche

1. Telefonapparat mit Sprechsignalverstärken (7 und 11), mit einem ersten Dämpfungsglied (12) auf einem Sendekanal (6), der ein Mikrophon (5) mit einem Koppelkreis (1) einer Telefonleitung (3) verbindet, einem zweiten Dämpfungsglied (13) auf einem Empfangskanal (10), der den Koppelkreis (1) mit einem Lautsprecher (9) verbindet, mit Steuermitteln (14) für die Dämpfungsglieder (12 und 13) in Abhängigkeit von den Pegelunterschieden zwischen dem Signalpegel vor dem Dämpfungsglied (12) auf dem Sendekanal (6) und dem Pegel vor dem Dämpfungsglied (13) auf dem Empfangskanal (10), wobei diese Pegel je von einem Integrierglied (15 bzw. 16) berechnet werden, und mit Mitteln, um eine Differenz zwischen den Pegeln der auf den beiden Kanälen entnommenen Signale einzuführen, sobald das einem der Kanäle zugeordnete Dämpfungsglied in die Dämpfungsposition gebracht wurde und das dem anderen Kanal zugeordnete Dämpfungsglied in die nicht-dämpfende Position gebracht ist, dadurch gekennzeichnet, daß jedes Dämpfungsglied (12, 13) aus einer variablen Impedanz besteht, die in Ableitung zu dem betreffenden Kanal geschaltet ist und zwei Werte, einen sehr niedrigen und einen sehr hohen Wert, annehmen kann, und daß die Mittel, die eine Differenz zwischen den Pegeln der auf den beiden Kanälen entnommenen Signale einführen, aus einer Widerstandsbrücke bestehen, die aus je zwei Festwiderständen (19 und 20, 22 und 23), welche in den jeweiligen Kanal vor dem zu diesem Kanal gehörenden Dämpfungsglied angeordnet sind, und aus dem das Dämpfungsglied bildenden variablen Widerstand gebildet wird, wobei der gemeinsame Punkt der beiden Festwiderstände den Entnahmepunkt (18, 21) des Signals in jedem Kanal bildet, und daß jedes Dämpfungsglied (12, 13) zwei Dioden (121 und 122, 131 und 132) aufweist, die in gleicher Richtung geschaltet sind und deren Verbindungspunkt mit dem zu diesem Dämpfungsglied gehörenden Kanal verbunden ist, wobei die andere Elektrode einer dieser Dioden an ein gegebenes Potential gelegt ist und die andere Elektrode der anderen Diode mit einer der Klemmen einer Stromquelle (123, 133) verbunden ist, die gemäß dem von den Steuermitteln (14) kommenden Befehl einen Strom mit einem ersten oder einem zweiten Wert erzeugen kann, wobei die Dioden (121 und 122, 131 und 132) einen sehr geringen oder einen sehr hohen Widerstand aufweisen, je nachdem, ob der sie durchquerende Strom den ersten oder den zweiten vorgenannten Wert hat, wobei die andere Klemme der Stromquelle (123, 133) auf ein gegebenes Potential gebracht ist und eines der beiden Potentiale ein Bezugspotential bildet.

2. Telefonapparat nach Anspruch 1, dadurch gekennzeichnet, daß jedes Integrierglied (15, 16) einen Gleichrichterkreis (151 und 152, 161 und 162) gefolgt von einem ersten Glättungskreis (153, 154 und 163, 164) aufweist, der eine Glättung von Silben durchführen kann, seinerseits gefolgt von einem zweiten Glättungskreis (154, 155, 156 und 164, 165, 166), der eine Glättung von Wörtern durchführen kann.

3. Telefonapparat nach Anspruch 2, dadurch gekennzeichnet, daß der erste Glättungskreis (153, 154 und 163, 164) ein RC-Kreis mit einer sehr niedrigen Lade-Zeitkonstanten und mit einer Entlade-Zeitkonstanten gleich der mittleren Dauer einer Silbe ist.

4. Telefonapparat nach einem der Ansprüche 2 und 3, dadurch gekennzeichnet, daß der zweite Glättungskreis (154, 155, 156 und 164, 165, 166) ein RC-Kreis mit einer Entlade-Zeitkonstante gleich der mittleren Dauer des Schweigens zwischen Wörtern innerhalb eines Satzes ist.

Fig.1

Fig.2

0 082 755